# EUROPÄISCHE PATENTSCHRIFT

(11) **EP 2 361 855 B1**
(45) Veröffentlichungstag und Bekanntmachung des Hinweises auf die Patenterteilung: **05.04.2017**
(21) Anmeldenummer: 11405216.0
(22) Anmeldetag: 22.02.2011
(51) Int. Cl.: B65G 1/04, B65G 1/06

(54) **Regalbedienvorrichtung**
Shelf-serving device
Dispositif de commande d'étagère

(30) Priorität: 26.02.2010 CH 2452010
(43) Veröffentlichungstag der Anmeldung: 31.08.2011
(73) Patentinhaber: Stöcklin Logistik AG, 4147 Aesch (CH)
(72) Erfinder: Voegtli, Urs, 4143 Dornach (CH); Krebs, Bernd, 79618 Rheinfelden (DE); Härri, Vinzenz, 6074 Giswil (CH)
(74) Vertreter: Söllner, Udo

(56) Entgegenhaltungen:
- EP-A1- 0 894 740
- DE-A1- 2 930 569
- FR-A1- 2 915 932
- US-A- 4 286 911

## Beschreibung

Die vorliegende Erfindung betrifft eine Regalbedienvorrichtung mit einem Regalbediengerät und einem Satellitenfahrzeug gemäss dem Oberbegriff des unabhängigen Patentanspruchs 1 sowie ein Kanallager mit einer Vielzahl von Kanälen zur Aufnahme von Lagergut, beispielsweise von Paletten.

Zur Zwischenlagerung von Tiefkühlprodukten werden in der Nahrungsmittelindustrie vollautomatische Kanallager eingesetzt, in denen die Tiefkühlprodukte bei Temperaturen von bis zu -30°C gelagert werden. Die Kanallager umfassen eine Vielzahl von Kanälen zur Aufnahme beispielsweise von Paletten, auf denen die Tiefkühlprodukte lagern. Zur optimalen Raumausnutzung sind die Kanäle der Kanallager für die mehrfachtiefe Lagerung ausgebildet, d. h. mehrere Paletten können im selben Kanal hintereinander gelagert werden. Dies bedingt eine ausgeklügelte Logistik bezüglich dem Ein- und Auslagern nach Art und Verfalldatum der Tiefkühlprodukte.

Das Kanallager umfasst zwischen den Kanälen Gassen, um den Zugang zu den einzelnen Kanälen sicherzustellen. Das Ein- und Auslagern der Paletten aus dem Kanallager erfolgt mit einer Regalbedienvorrichtung, die ein Regalbediengerät und ein Satellitenfahrzeug umfasst. Das Regalbediengerät bewegt sich in der Gasse bis zum entsprechenden Kanal, aus dem beispielsweise eine Palette entnommen werden soll. Das Regalbediengerät umfasst eine höhenverstellbare Tragplattform, auf der das Satellitenfahrzeug angeordnet ist, welches vom Regalbediengerät in den entsprechenden Kanal hinein und bis zur ersten Palette im Kanal fährt, die Palette anhebt und diese dann zurück auf das Regalbediengerät verfährt. Das Regalbediengerät kann anschliessend die Gasse verlassen und die Palette an einer Übergabestelle abgeben.

Bekannte Regalbedienvorrichtungen aus dem Stand der Technik umfassen ein Regalbediengerät, welches mit einem Satellitenfahrzeug über Funk oder Kabel korrespondiert. Die für das Verfahren des Satellitenfahrzeuges und das Anheben der Palette notwendige Energie wird entweder über Kabel zugeführt oder ist im Satellitenfahrzeug in Bleibatterien gespeichert. Kabel sind nachteilig, da bei tiefen Temperaturen nur sehr teure Kabel für diesen Zweck eingesetzt werden können, diese zudem einem grossen Verschleiss ausgesetzt sind und jährlich ersetzt werden müssen. Bleibatterien müssen bei diesen tiefen Temperaturen beheizt werden. Dies bedingt einen zusätzlichen Energieverschleiss und steht im krassen Widerspruch zu einer möglichst ökonomischen Energieauswertung. Da Bleibatterien nicht schnellladefähig sind, müssen für einen Dreischichtbetrieb Ersatzbatterien vorrätig gehalten und ausgewechselt werden.

DE 10 2008 022 323 A1 zeigt ein Kanallager mit einem Satellitenfahrzeug, das in Ruhestellung in einem Bahnhof angeordnet ist. Der Bahnhof wird manuell mit einem Gabelstapler am jeweiligen Kanal angebracht. Das Satellitenfahrzeug kann anschliessend aus dem Bahnhof in den Kanal einfahren, eine Palette aufladen und wieder in den Bahnhof zurückkehren. Der Bahnhof weist Mittel auf, um das Satellitenfahrzeug mit Energie zu versorgen und mit ihm zu kommunizieren. Als Energiespeicher für das Satellitenfahrzeug kommen beispielsweise Superkondensatoren zum Einsatz.

Da die Superkondensatoren nur eine beschränkte Energiemenge speichern können, besteht das Risiko eines Ausfalls des Satellitenfahrzeugs, der ein manuelles Eingreifen vonnöten macht.

DE 29 30 569 beschreibt eine gattungsgemäße Regalbedienvorrichtung.

Der vorliegenden Erfindung liegt daher die Aufgabe zugrunde, eine Regalbedienvorrichtung zu schaffen, mit welcher ein energieversorgungsbedingter Ausfall des Satellitenfahrzeuges unter allen Umständen verhindert wird.

Diese Aufgabe wird durch die erfindungsgemässe Regalbedienvorrichtung gelöst, wie sie im unabhängigen Patentanspruch 1 definiert ist. Der unabhängige Patentanspruch 13 definiert ein Kanallager mit einer erfindungsgemässen Regalbedienvorrichtung. Vorteilhafte Ausführungsvarianten ergeben sich aus den abhängigen Patentansprüchen.

Das Wesen der Erfindung besteht darin, dass die erfindungsgemässe Regalbedienvorrichtung ein Regalbediengerät und ein Satellitenfahrzeug umfasst. Das Satellitenfahrzeug kann von einer Tragplattform des Regalbediengeräts in einen Kanal eines Kanallagers ein- und aus diesem wieder auf die Tragplattform des Regalbediengeräts zurückfahren. Das Satellitenfahrzeug umfasst eine Hubeinrichtung zum Anheben von Lagergut, beispielsweise von Paletten, einen Antrieb zum Verfahren des Satellitenfahrzeugs, einen Energiespeicher mit Superkondensatoren als Speichermittel und eine Steuerungseinrichtung für die Hubeinrichtung, für den Antrieb und zur Kommunikation mit dem Regalbediengerät. Die Steuerungseinrichtung ist mit dem Regalbediengerät über Funk verbunden. Der Energiespeicher weist eine Überwachungseinrichtung zur Überwachung des Ladezustands des Speichermittels auf und das Regalbediengerät eine Ladesteuerungseinrichtung, wobei die Überwachungseinrichtung zur Übermittlung von Ladezustandsinformationen über die Steuerungseinrichtung per Funk mit der Ladesteuerungseinrichtung verbunden ist, und die Ladesteuerungseinrichtung zum Auslösen und Stoppen des Ladevorgangs des Energiespeichers des Satellitenfahrzeuges aus einer Ladeenergiequelle des Regalbediengeräts ausgebildet ist.

Die Überwachungseinrichtung des Energiespeichers überwacht permanent den Ladezustand der Superkondensatoren. Beim Unterschreiten eines gewissen Ladezustands kann sofort die Rückfahrt auf das Regalbediengerät eingeleitet werden, um einen energieversorgungsbedingten Ausfall zu vermeiden.

Vorzugsweise weisen bei der erfindungsgemässen Regalbedienvorrichtung das Regalbediengerät und das Satellitenfahrzeug zusammenpassende Ladekontakte für den Ladevorgang des Energiespeichers des Satellitenfahrzeuges auf. Ladekontakte sind eine einfache und sichere Möglichkeit, um eine Verbindung zur Energieübertragung einfach und autonom herzustellen.

Alternativ umfassen bei der erfindungsgemässen Regalbedienvorrichtung das Regalbediengerät und das Satellitenfahrzeug Mittel für eine nicht körpergebundene Energieübertragung, insbesondere eine induktive Energieübertragung, für den Ladevorgang des Energiespeichers des Satellitenfahrzeuges. Eine induktive Energieübertragung hat den Vorteil, dass kein Verschleiss an mechanischen Verbindungselementen, z. B. an Ladekontakten, auftreten kann.

Noch bevorzugter umfassen bei der erfindungsgemässen Regalbedienvorrichtung das Regalbediengerät und das Satellitenfahrzeug Mittel zur Positionsbestimmung des Satellitenfahrzeugs, z. B. Laserentfernungsmesser, Lichttaster oder Inkrementalgeber. Zusammen mit der Überwachungseinrichtung kann die aktuell verbrauchte Energie pro Wegstrecke ermittelt werden. Ausserdem erlaubt die exakte Positionsbestimmung festzustellen, ob sich das Satellitenfahrzeug auf dem Regalbediengerät befindet und ob die Position für den Ladevorgang bereits erreicht ist.

Vorzugsweise umfasst bei der erfindungsgemässen Regalbedienvorrichtung der Energiespeicher eine Notbatterie zur Notstromversorgung des Satellitenfahrzeuges. Die Notbatterie ermöglicht für eine gewisse Zeitdauer den Betrieb des Satellitenfahrzeugs, auch wenn die Superkondensatoren leer sind. Insofern werden die energieversorgungsbedingten Ausfälle weiter reduziert. Unter bestimmten Bedingungen ist sogar eine langsame Rückfahrt auf das Regalbediengerät möglich.

Bevorzugt ist bei der erfindungsgemässen Regalbedienvorrichtung die Überwachungseinrichtung zur Überwachung des Ladezustands zusätzlich zur Überwachung der Temperatur der Superkondensatoren und der Notbatterie ausgebildet. Die Überwachung der Temperaturen kann auf ein Fehlverhalten im Betrieb oder beim Ladevorgang hinweisen. Durch die Messung der Temperatur ist die Überwachungseinrichtung in der Lage, den ordnungsgemässen Betrieb mitzuteilen oder der Ladesteuerungseinrichtung eine Störung zu melden, um den Ladevorgang sofort zu unterbrechen.

Noch bevorzugter ist bei der erfindungsgemässen Regalbedienvorrichtung die Notbatterie zusammen mit dem Ladevorgang der Superkondensatoren ladbar. Somit kann die Notbatterie auf einfache Art und Weise geladen werden.

Wiederum bevorzugt ist bei der erfindungsgemässen Regalbedienvorrichtung die Steuerungseinrichtung derart ausgebildet, dass bei einem Umschalten auf die Notbatterie automatisch ein Notprogramm abgearbeitet wird. Das Notprogramm schaltet Energieverbraucher, die nicht absolut notwendig sind, sofort aus, analysiert ob anhand der vorhandenen Energiemenge in der Notbatterie und der ermittelten Entfernung vom Regalbediengerät eine Rückkehr auf das Regalbediengerät mit oder ohne geladene Palette möglich ist, lädt, falls nötig, eine geladene Palette ab und fährt möglichst energieschonend auf das Regalbediengerät zurück.

Vorzugsweise sind bei der erfindungsgemässen Regalbedienvorrichtung das Regalbediengerät und das Satellitenfahrzeug über ein Notladekabel verbindbar. Bei einem energieversorgungsbedingten Ausfall kann mit einem Notladekabel der Energiespeicher wieder aufgeladen werden. Dies verhindert, dass bei einem energieversorgungsbedingten Ausfall das Satellitenfahrzeug mit einer Seilwinde geborgen werden muss.

Bevorzugt umfasst bei der erfindungsgemässen Regalbedienvorrichtung die Hubeinrichtung des Satellitenfahrzeugs einen Hubmotor und Spindelhubgetriebe zum Heben der Palette. Die Spindelhubgetriebe heben die Oberseite des Satellitenfahrzeuges an und ermöglichen so das Abheben der Palette vom Regalbediengerät oder vom Kanal des Kanallagers.

Noch bevorzugter umfasst bei der erfindungsgemässen Regalbedienvorrichtung das Satellitenfahrzeug einen Antriebsmotor, der derart ausgebildet ist, dass bei einem Bremsvorgang des Antriebmotors Energie zurückgewonnen und im Energiespeicher speicherbar ist. Dies ermöglicht eine zusätzliche Ladung der Superkondensatoren.

Vorzugsweise ist bei der erfindungsgemässen Regalbedienvorrichtung das Satellitenfahrzeug als Hauptsatellitenfahrzeug mit einem weiteren Satellitenfahrzeug als Nebensatellitenfahrzeug mechanisch und elektrisch derart koppelbar, dass die Steuerungseinrichtung des Hauptsatellitenfahrzeugs auch das Nebensatellitenfahrzeug steuert. Die gekoppelten Satellitenfahrzeuge können gleichzeitig zwei Paletten anheben und verfahren, somit wird der mögliche Durchsatz im Kanallager erhöht. Die Steuerungseinrichtung des Nebensatellitenfahrzeugs kann entfallen und somit können Kosten eingespart werden.

Ein weiterer Aspekt der Erfindung betrifft ein Kanallager mit einer Vielzahl von Kanälen zur Aufnahme von Lagergut, beispielsweise von Paletten, wobei das Kanallager eine vorstehend beschriebene Regalbedienvorrichtung umfasst.

Im Folgenden wird die erfindungsgemässe Regalbedienvorrichtung unter Bezugnahme auf die beigefügten Zeichnungen anhand eines Ausführungsbeispiels detaillierter beschrieben. Es zeigen:
- Fig. 1: - ein Ausführungsbeispiel einer erfindungsgemässen Regalbedienvorrichtung mit einem Regalbediengerät und einem Satellitenfahrzeug in einer schematischen Ansicht,
- Fig. 2: - das Satellitenfahrzeug von Fig. 1 in einer Schrägansicht,
- Fig. 3: - ein Blockschaltbild der Funktionskomponenten der Regalbedienvorrichtung von Fig. 1,
- Fig. 4: - zwei Satellitenfahrzeuge von Fig. 1 in einem gekoppelten Zustand in einer Schrägansicht und
- Fig. 5: - die zwei Satellitenfahrzeuge von Fig. 4 auf einer Tragplattform des Regalbediengeräts von Fig. 1.

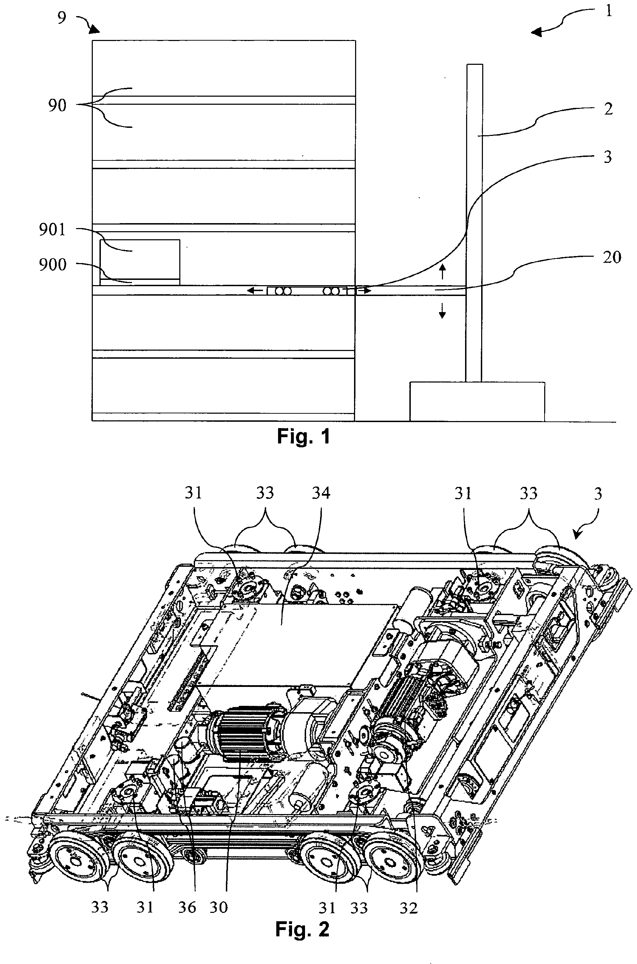

Fig. 1 zeigt ein Ausführungsbeispiel einer erfindungsgemässen Regalbedienvorrichtung 1 in einem vollautomatischen Kanallager 9, in dem z. B. Tiefkühlprodukte 901 bei Temperaturen von bis zu -30°C gelagert werden. Das Kanallager 9 umfasst eine Vielzahl von Kanälen 90 zur Aufnahme beispielsweise von Paletten 900, auf denen die Tiefkühlprodukte 901 lagern. Zur optimalen Raumausnutzung sind die Kanäle 90 des Kanallagers 9 für die mehrfachtiefe Lagerung ausgebildet, d. h. mehrere Paletten 900 können im selben Kanal 90 hintereinander gelagert werden.

Das Kanallager 9 umfasst zwischen den Kanälen 90 Gassen, um den Zugang zu den einzelnen Kanälen 90 sicherzustellen. Das Ein- und Auslagern der Paletten 900 aus dem Kanallager 9 erfolgt mit der Regalbedienvorrichtung 1, die ein Regalbediengerät 2 und ein Satellitenfahrzeug 3 umfasst. Das Regalbediengerät 2 bewegt sich in der Gasse bis zum entsprechenden Kanal 90, aus dem beispielsweise eine Palette 900 entnommen werden soll. Das Regalbediengerät 2 umfasst eine höhenverstellbare Tragplattform 20, auf der das Satellitenfahrzeug 3 angeordnet ist, welches vom Regalbediengerät 2 in den entsprechenden Kanal 90 hinein und bis zur ersten Palette 900 im Kanal 90 fährt, die Palette 900 anhebt und diese dann zurück auf das Regalbediengerät 2 verfährt. Das Regalbediengerät 2 kann anschliessend die Gasse verlassen und die Palette 900 an einer Übergabestelle abgeben. Soweit entspricht dies dem z. B. in DE 10 2008 022 323 A1 beschriebenen Stand der Technik, so dass der Fachmann keiner näheren Erläuterung bedarf.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen.

Fig. 2 zeigt das Satellitenfahrzeug 3, das eine Hubeinrichtung mit Hubmotor 30 und vier Spindelhubgetrieben 31 zum Anheben von Lagergut, beispielsweise der Palette 900, einen Antrieb mit Antriebsmotor 32 und Räder 33 zum Verfahren des Satellitenfahrzeugs 3 sowie einen Energiespeicher 34 und Ladekontakte 36 umfasst.

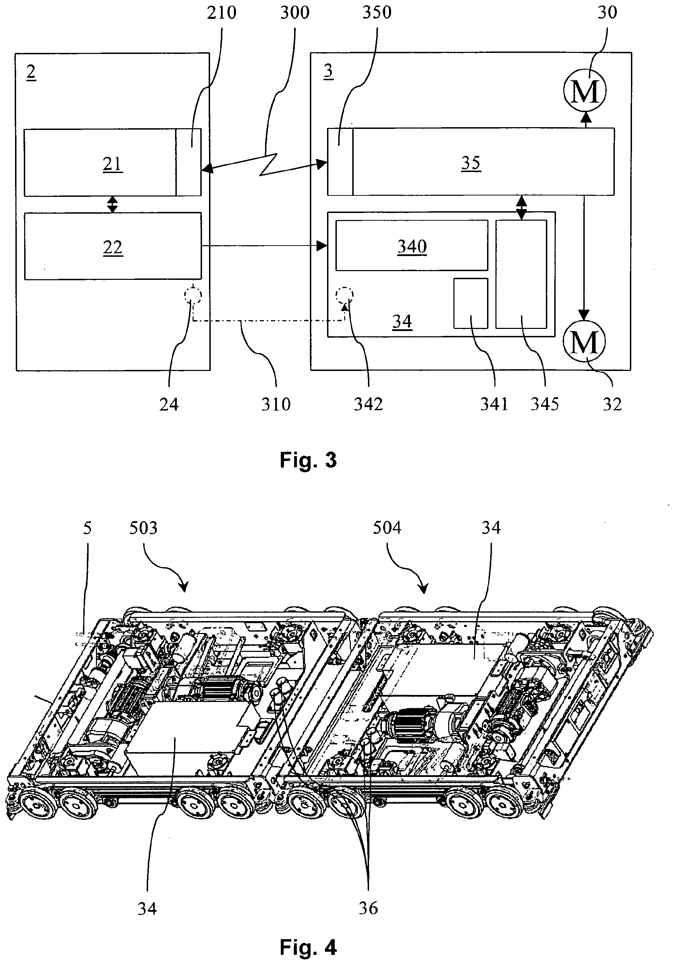

Fig. 3 zeigt in einem Blockschaltbild Funktionsblöcke der Regalbedienvorrichtung 1 mit dem Regalbediengerät 2 und dem Satellitenfahrzeug 3. Das Regalbediengerät 2 umfasst eine Ladesteuerungseinrichtung 21 und eine Ladeenergiequelle 22. Das Satellitenfahrzeug 3 umfasst den Energiespeicher 34 mit Superkondensatoren 340 und einer Notbatterie 341 als Speichermittel und eine Steuerungseinrichtung 35 für den Hubmotor 30, für den Antriebsmotor 32 und zur Kommunikation mit dem Regalbediengerät 2 mittels Funk 300, wobei die Ladesteuerungseinrichtung 21 und die Steuerungseinrichtung 35 jeweils ein Funkmodul 210, 350, bevorzugt jeweils ein Bluetooth-Funkmodul, aufweisen. Der Energiespeicher 34 umfasst ferner eine Überwachungseinrichtung 345 zur Überwachung des Ladezustands der Speichermittel, die zur Übermittlung von Ladezustandsinformationen mit der Steuerungseinrichtung 35 verbunden ist.

Zum Einlagern einer Palette 900 in das Kanallager 9 holt das Regalbediengerät die betreffende Palette 900 an einer Übergabestelle ab. Anschliessend fährt das Regalbediengerät zum entsprechenden Kanal 90 und hebt die Tragplattform 20 in die dem jeweiligen Kanal 90 entsprechende Höhe, damit das Satellitenfahrzeug 3 in den Kanal 90 einfahren kann.

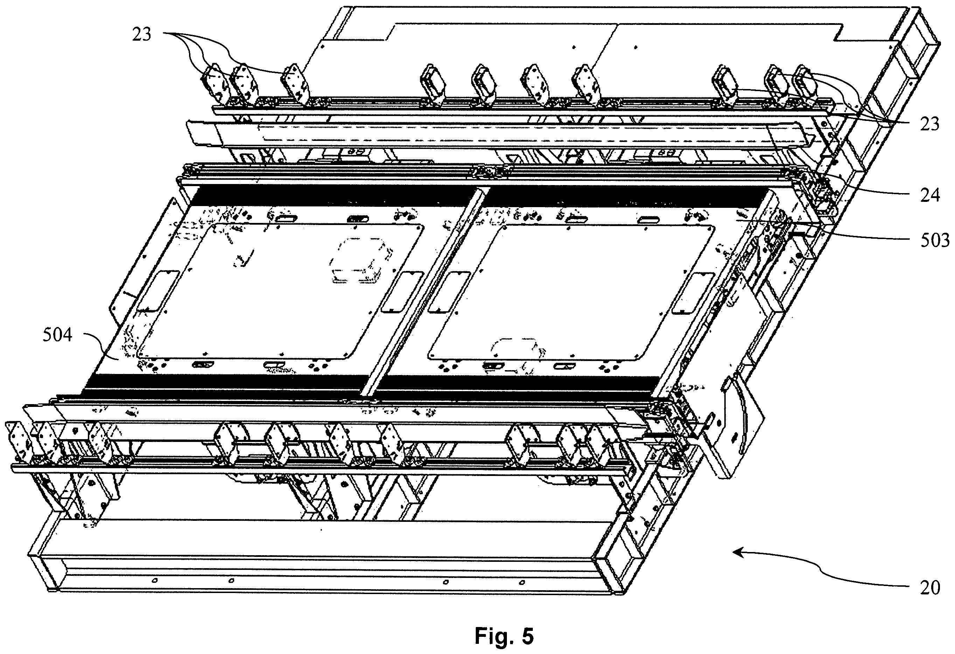

Zur Energieversorgung des Satellitenfahrzeuges müssen die Superkondensatoren 340 und die Notbatterie 341 des Energiespeichers 34 des Satellitenfahrzeugs 3 geladen werden. Dies erfolgt über Ladekontakte 36 auf der Tragplattform 20 und dem Satellitenfahrzeug 3. Hierfür wird permanent die Position des Satellitenfahrzeugs 3 mit einer Laserentfernungsmessung, mit Lichttastern 23 (siehe Fig. 5) und mit Inkrementalgebern überprüft. Mit der Laserentfernungsmessung wird vom Satellitenfahrzeug 3 über einen auf dem Regalbediengerät 2 installierten Spiegelreflektor die genaue Entfernung vom Regalbediengerät überprüft. Lichttaster 23 auf dem Regalbediengerät 2 überwachen die Position der Palette(n) 900 auf dem Regalbediengerät 2. Das Satellitenfahrzeug 3 umfasst Lichttaster, die nach unten tasten, um das Erreichen der Position für den Ladevorgang auf dem Regalbediengerät 2 zu detektieren. Das Regalbediengerät 2 umfasst Lichttaster nach oben, um das Vorhandensein des Satellitenfahrzeugs 3 auf dem Regalbediengerät 2 detektieren zu können. Die Inkrementalgeber sind an Antriebswellen der Antriebsräder 33 gekoppelt, um eine zusätzliche Wegmessung parallel zur Laserentfernungsmessung zu erhalten.

Stimmt die Position der Ladekontakte 36 des Satellitenfahrzeugs 3 mit den Ladekontakten 36 auf der Tragplattform 20 überein, so kann der Ladevorgang ausgelöst werden. Hierfür ist die Ladesteuerungseinrichtung 21 zum Auslösen und Stoppen des Ladevorgangs des Energiespeichers 34 aus der Ladeenergiequelle 22 des Regalbediengeräts 2 wie obenstehend beschrieben über Funk 300 mit der Steuerungseinrichtung 35 verbunden. Anlässlich des Ladevorgangs werden innerhalb weniger Sekunden, vorzugsweise 5 bis 15 Sekunden, bevorzugt ungefähr 10 Sekunden mittels eines mittleren Ladestroms von vorzugsweise 100 bis 200 Ampere, bevorzugt ungefähr 150 Ampere, die Superkondensatoren bei einer Spannung von vorzugsweise 20 bis 40 VDC, bevorzugt bei einer Spannung von ungefähr 30 VDC, vollgeladen. Die Superkondensatoren haben eine Kapazität von vorzugsweise 1500 bis 2500 Farad, bevorzugt von 2000 Farad, und können vorzugsweise eine Energiemenge von 20 bis 30 Wattstunden (Wh) speichern, bevorzugt eine Energiemenge von ungefähr 23 Wh. Eine Hin- und Rückfahrt inklusive Anheben und Absenken der Palette 900 benötigt ungefähr 10 Wh. Das Satellitenfahrzeug verfügt somit über eine Reserve für etwas mehr als eine zusätzliche Hin- und Rückfahrt. Diese relativ grosse Reserve ist zweckmässig, da der Einsatz bei sehr tiefen Temperaturen erfolgt, ein weitgehendst autonomer Betrieb sichergestellt sein muss und auch eine gewisse Alterung der Bauteile in Kauf genommen werden muss. Mit dem Ladevorgang der Superkondensatoren wird gleichzeitig auch die Notbatterie geladen.

Alternativ kann der Ladevorgang des Satellitenfahrzeugs auch induktiv erfolgen, d. h. die Ladeenergiequelle 22 des Regalbediengeräts 2 kann eine Sendespule 24 und das Satellitenfahrzeug 3 eine Empfangsspule 342 umfassen, um eine induktive Ladung 310 zu ermöglichen.

Das Satellitenfahrzeug hebt die Palette 900 mit dem Hubmotor 30 über die vier Spindelhubgetriebe 31 an und von der Tragplattform 20 weg. Das Satellitenfahrzeug 3 kann nun in den Kanal 90 ein- und bis zur vorgegebenen Position vorfahren, an der das Satellitenfahrzeug die Palette 900 absenkt, die nun auf einer oberen Schiene des Kanals 90 zu liegen kommt. Die Palette 900 ist somit an ihrem Lagerort angekommen und das Satellitenfahrzeug 3 fährt wieder auf die Tragplattform 20 des Regalbediengeräts 2 zurück. Beim Bremsen wird die Bremsenergie in elektrische Energie zurückgewandelt und in den Superkondensatoren 340 gespeichert. Die so gewonnene Energiemenge ist zwar relativ gering, da bei einem Bremsvorgang lediglich etwa 0,3 Wh gewonnen werden können, aber trotzdem von Nutzen.

Die Überwachungseinrichtung 345 überwacht permanent den Ladezustand der Superkondensatoren 340 und der Notbatterie 341, um in einem Störungsfall sofort die Geschwindigkeit zu reduzieren, um zumindest eine Rückfahrt des Satellitenfahrzeugs 3 auf das Regalbediengerät 2 zu ermöglichen. Falls in einem schweren Störungsfall eine zu geringe Energiemenge in den Superkondensatoren 340 vorhanden sein sollte, so ermöglicht die Notbatterie 341, während vorzugsweise 2 bis 4 Stunden, bevorzugt ungefähr während 3 Stunden, einen Betrieb der Steuerungseinrichtung 35 des Satellitenfahrzeugs 3, damit zumindest die Kommunikation mit dem Regalbediengerät 2 aufrechterhalten werden kann. Hierbei wird automatisch ein Notprogramm abgearbeitet und die Notbatterie 341 erlaubt unter bestimmten Bedingungen auch eine sehr langsame Rückfahrt des Satellitenfahrzeugs 3 auf das Regalbediengerät 2, um die Superkondensatoren 340 wieder aufzuladen. Ist eine Rückfahrt des Satellitenfahrzeugs 3 nicht mehr möglich, so kann notfallmässig mittels Notladekabel 5 (siehe Fig. 4) das Satellitenfahrzeug 3 mit dem Regalbediengerät 2 verbunden werden, um den Energiespeicher 34 wieder aufzuladen. Einzig bei einer Störung des Antriebmotors 32 muss das Satellitenfahrzeug 3 mittels Seilwinde geborgen werden. Die Notbatterie 341 ist vorzugsweise eine Lithium-Eisen-Phosphat-Batterie (LiFePO4).

Die Überwachungseinrichtung 345 überwacht ebenfalls permanent die Temperatur der Superkondensatoren 340 und der Notbatterie 341, um eine Überhitzung, die eine vorzeitige Alterung oder einen Defekt verursachen könnte, zu verhindern.

Das Regalbediengerät 2 ist über eine Schleifleitung direkt am Stromnetz angeschlossen und wird dreiphasig mit 400V versorgt.

Fig. 4 zeigt schliesslich zwei Satellitenfahrzeuge, die miteinander gekoppelt sind und gleichzeitig zwei Paletten 900 transportieren können. Die beiden Satellitenfahrzeuge werden hierbei permanent mittels Schrauben miteinander verbunden. Aus Kostengründen können gewisse Funktionen oder Baugruppen, beispielsweise die Steuerungseinrichtung 35, in einem Hauptsatellitenfahrzeug 503 zusammengelegt werden, die dann auf einem Nebensatellitenfahrzeug 504 entfallen können. Gewisse Baugruppen wie der Energiespeicher 34, der Hubmotor 30 bzw. der Antriebsmotor 32 sind hingegen auf dem Hauptsatellitenfahrzeug 503 und auf dem Nebensatellitenfahrzeug 504 vorhanden.

Fig. 5 zeigt die Tragplattform 20 des Regalbediengeräts 2, auf der sich ein Hauptsatellitenfahrzeug 503 und ein Nebensatellitenfahrzeug 504 befinden. Wie vorstehend beschrieben sind das Hauptsatellitenfahrzeug 503 und das Nebensatellitenfahrzeug 504 miteinander gekoppelt. Die Tragplattform 20 umfasst Kettenförderer 24, die zum Ein- und Ausfahren der Palette(n) 900 an der Übergabestelle dienen, und Lichttaster zur Detektion der genauen Position der Palette(n) 900 auf den Kettenförderer 24. Die Kettenförderer 24 sind derart angeordnet, dass das Hauptsatellitenfahrzeug 503 und das Nebensatellitenfahrzeug 504 unter die Palette(n) 900 fahren und dann die Palette(n) 900 anheben können.

Zu der vorbeschriebenen Regalbedienvorrichtung sind weitere konstruktive Variationen realisierbar. Insbesondere ist auch die Konstruktion einer Regalbedienvorrichtung mit einem Regalbediengerät und mehreren Satellitenfahrzeugen denkbar, wobei jeweils nur ein Satellitenfahrzeug auf dem Regalbediengerät transportiert wird und die weiteren Satellitenfahrzeuge jeweils in einem Kanal warten, bis sie abgeholt werden. Vorzugsweise warten die Satellitenfahrzeuge am Ende des jeweiligen Kanals, damit sie bei einer sehr langen Wartedauer vom Regalbediengerät über eine Notspeiseeinrichtung geladen werden können, falls der Energiespeicher leer sein sollte.

## Patentansprüche

1. Regalbedienvorrichtung (1) mit einem Regalbediengerät (2) und einem Satellitenfahrzeug (3), das von einer Tragplattform (20) des Regalbediengeräts (2) in einen Kanal (90) eines Kanallagers (9) ein- und aus diesem wieder auf die Tragplattform (20) des Regalbediengeräts (2) zurückfahrbar ist, wobei das Satellitenfahrzeug (3) eine Hubeinrichtung (30, 31) zum Anheben von Lagergut, beispielsweise von Paletten (900), einen Antrieb (32, 33) zum Verfahren des Satellitenfahrzeugs (3), einen Energiespeicher (34) und eine Steuerungseinrichtung (35) für die Hubeinrichtung (30, 31), für den Antrieb (32, 33) und zur Kommunikation mit dem Regalbediengerät (2) umfasst, wobei der Energiespeicher (34) eine Überwachungseinrichtung (345) zur Überwachung des Ladezustands des Speichermittels und das Regalbediengerät (2) eine Ladesteuerungseinrichtung (21) aufweist, wobei die Ladesteuerungseinrichtung (21) zum Auslösen und Stoppen des Ladevorgangs des Energiespeichers (34) des Satellitenfahrzeuges (3) aus einer Ladeenergiequelle (22) des Regalbediengeräts (2) ausgebildet ist,
**dadurch gekennzeichnet, dass** die Steuerungseinrichtung (35) mit dem Regalbediengerät (2) über Funk (300) verbunden ist, wobei die Überwachungseinrichtung (345) zur Übermittlung von Ladezustandsinformationen über die Steuerungseinrichtung (35) per Funk (300) mit der Ladesteuerungseinrichtung (21) verbunden ist, und der Energiespeicher mit Superkondensatoren als Speichermittel ausgebildet ist.

2. Regalbedienvorrichtung (1) nach Anspruch 1, bei der das Regalbediengerät (2) und das Satellitenfahrzeug (3) zusammenpassende Ladekontakte (36) für den Ladevorgang des Energiespeichers (34) des Satellitenfahrzeuges (3) aufweisen.

3. Regalbedienvorrichtung (1) nach Anspruch 1, bei der das Regalbediengerät (2) und das Satellitenfahrzeug (3) Mittel (24, 342) für eine nicht körpergebundene Energieübertragung, insbesondere eine induktive Energieübertragung (310), für den Ladevorgang des Energiespeichers (34) des Satellitenfahrzeuges (3) aufweisen.

4. Regalbedienvorrichtung (1) nach einem der Ansprüche 1 bis 3, bei der das Regalbediengerät (2) und das Satellitenfahrzeug (3) Mittel (23) zur Positionsbestimmung des Satellitenfahrzeugs (3), z. B. Laserentfernungsmesser, Lichttaster oder Inkrementalgeber, umfassen.

5. Regalbedienvorrichtung (1) nach einem der Ansprüche 1 bis 4, bei welcher der Energiespeicher (34) eine Notbatterie (341) zur Notstromversorgung des Satellitenfahrzeuges (3) umfasst.

6. Regalbedienvorrichtung (1) nach Anspruch 5, bei der die Überwachungseinrichtung (345) zur Überwachung des Ladezustands zusätzlich zur Überwachung der Temperatur der Superkondensatoren (340) und der Notbatterie (341) ausgebildet ist.

7. Regalbedienvorrichtung (1) nach Anspruch 5 oder 6, bei der die Notbatterie (341) mit dem Ladevorgang der Superkondensatoren (340) ladbar ist.

8. Regalbedienvorrichtung (1) nach einem der Ansprüche 5 bis 7, bei der die Steuerungseinrichtung (35) derart ausgebildet ist, dass bei einem Umschalten auf die Notbatterie (341) automatisch ein Notprogramm abgearbeitet wird.

9. Regalbedienvorrichtung (1) nach einem der Ansprüche 1 bis 8, bei der das Regalbediengerät (2) und das Satellitenfahrzeug (3) für die Aufladung des Energiespeichers (34) über ein Notladekabel (5) verbindbar sind.

10. Regalbedienvorrichtung (1) nach einem der Ansprüche 1 bis 9, bei der die Hubeinrichtung des Satellitenfahrzeugs (3) einen Hubmotor (30) und Spindelhubgetriebe (31) zum Heben der Palette (900) umfasst.

11. Regalbedienvorrichtung (1) nach einem der Ansprüche 1 bis 10, bei der das Satellitenfahrzeug einen Antriebsmotor (32) umfasst, der derart ausgebildet ist, dass bei einem Bremsvorgang des Antriebmotors (32) Energie zurückgewonnen und im Energiespeicher (34) speicherbar ist.

12. Regalbedienvorrichtung (1) nach einem der Ansprüche 1 bis 11, bei der das Satellitenfahrzeug (3) als Hauptsatellitenfahrzeug (503) mit einem weiteren Satellitenfahrzeug (3) als Nebensatellitenfahrzeug (504) mechanisch und elektrisch derart koppelbar ist, dass die Steuerungseinrichtung (35) des Hauptsatellitenfahrzeugs (503) auch das Nebensatellitenfahrzeug (504) steuert.

13. Kanallager (9) mit einer Vielzahl von Kanälen (90) zur Aufnahme von Lagergut, beispielsweise von Paletten (900), wobei das Kanallager (9) eine Regalbedienvorrichtung (1) nach einem der Ansprüche 1 bis 12 umfasst.

## Claims

1. A storage and retrieval device (1) comprising a storage and retrieval unit (2) and a satellite vehicle (3), which can be moved from a carrying platform (20) of the storage and retrieval unit (2) into a channel (90) of a channel store (9) and again moved back from the same onto the carrying platform (20) of the storage and retrieval unit (2), wherein the satellite vehicle (3) comprises a lifting device (30, 31) for lifting storage goods such as pallets (900), a drive (32, 33) for moving the satellite vehicle (3), an energy store (34) and a control device (35) for the lifting device (30, 31), for the drive (32, 33) and for communication with the storage and retrieval unit (2), wherein the energy store (34) comprises a monitoring device (345) for monitoring the charge state of the storage means and the storage and retrieval unit (2) comprises a charging control means (21), wherein the charging control means (21) is configured for triggering and stopping the charging process of the energy store (34) of the satellite vehicle (3) from a charge energy source (22) of the storage and retrieval unit (2),
**characterised in that** the control device (35) and the storage and retrieval unit (2) are in radio contact (300) with each other, wherein the monitoring device (345), for communicating charge state information (345) via the control device (35), is in radio contact (300) with the charging control means (21), and the energy store is configured with super-capacitors as a storage means.

2. The storage and retrieval device (1) according to claim 1, where the storage and retrieval unit (2) and the satellite vehicle (3) comprise matching charge contacts (36) for the charging process of the energy store (34) of the satellite vehicle (3).

3. The storage and retrieval device (1) according to claim 1, where the storage and retrieval unit (2) and the satellite vehicle (3) comprise means (24, 342) for a non-body-bound energy transmission, in particular an inductive energy transmission (310), for the charging process of the energy store (34) of the satellite vehicle (3).

4. The storage and retrieval device (1) according to one of claims 1 to 3, where the storage and retrieval unit (2) and the satellite vehicle (3) comprise means (23) such as laser distance metres, light sensors or incremental encoders for determining the position of the satellite vehicle (3).

5. The storage and retrieval device (1) according to one of claims 1 to 4, where the energy store (34) comprises an emergency battery (341) for the supply of emergency power to the satellite vehicle (3).

6. The storage and retrieval device (1) according claim 5, where the monitoring device (345) is configured for monitoring the charge state in addition to monitoring the temperature of the super capacitors (340) and of the emergency battery (341).

7. The storage and retrieval device (1) according to claim 5 or 6, where the emergency battery (341) can be charged with the charging process of the super capacitors (340).

8. The storage and retrieval device (1) according to one of claims 5 to 7, where the control device (35) is configured such that when a switch-over to the emergency battery (341) occurs, an emergency program is automatically executed.

9. he storage and retrieval device (1) according to one of claims 1 to 8, where the storage and retrieval unit (2) and the satellite vehicle (3) can be connected via an emergency charge cable (5) for charging the energy store (34).

10. The storage and retrieval device (1) according to one of claims 1 to 9, where the lifting device of the satellite vehicle (3) comprises a lifting motor (30) and a spindle lift gear (31) for lifting the pallet (900).

11. The storage and retrieval device (1) according to one of claims 1 to 10, where the satellite vehicle (3) comprises a drive motor (32), which is configured such that for a braking operation of the drive motor (32) energy is recovered which can be stored in the energy store (34).

12. The storage and retrieval device (1) according to one of claims 1 to 11, where the satellite vehicle (3) as the main satellite vehicle (503) can be mechanically and electrically coupled to a further satellite vehicle (3) as an ancillary satellite vehicle (503) such that the control device (35) of the main satellite vehicle (503) also controls the ancillary satellite vehicle (504).

13. A channel store (9) with a plurality of channels (90) for receiving storage goods such as pallets (900), wherein the channel store (9) comprises a storage and retrieval device (1) according to one of claims 1 to 12.

## Revendications

1. Dispositif de commande de rayon (1) comprenant un appareil de commande de rayon (2) et un véhicule satellite (3) qui, par une plate-forme porteuse (20) de l'appareil de commande de rayon (2), peut être entré dans un canal (90) d'un entrepôt à canaux (9) ou renvoyé depuis celui-ci de nouveau sur la plate-forme (20) de l'appareil de commande de rayon (2), dans lequel le véhicule satellite (3) comprend un dispositif de levage (30, 31) pour soulever de la marchandise de stockage, par exemple des palettes (900), un entraînement (32, 33) pour déplacer le véhicule satellite (3), un accumulateur d'énergie (34) et un dispositif de commande (35) pour le dispositif de levage (30, 31), pour l'entraînement (32, 33) et pour communiquer avec l'appareil de commande de rayon (2),
dans lequel l'accumulateur d'énergie (34) présente un dispositif de surveillance (345) pour surveiller l'état de charge du moyen de stockage et l'appareil de commande de rayon (2) présente un dispositif de commande de charge (21), dans lequel le dispositif de commande de charge (21) est conçu pour déclencher et arrêter l'opération de chargement de l'accumulateur d'énergie (34) du véhicule satellite (3) à partir d'une source d'énergie de charge (22) de l'appareil de commande de rayon (2),
**caractérisé en ce que** le dispositif de commande (35) est relié à l'appareil de commande de rayon (2) par radio (300), dans lequel le dispositif de surveillance (345) est relié au dispositif de commande de charge (21) par radio (300) par le biais du dispositif de commande (35), pour transmettre des informations d'état de charge, et l'accumulateur d'énergie est conçu avec des super-condensateurs en tant que moyens accumulateurs.

2. Dispositif de commande de rayon (1) selon la revendication 1, dans lequel l'appareil de commande de rayon (2) et le véhicule satellite (3) présentent des contacts de charge (36) concordants pour l'opération de chargement de l'accumulateur d'énergie (34) du véhicule satellite (3).

3. Dispositif de commande de rayon (1) selon la revendication 1, dans lequel l'appareil de commande de rayon (2) et le véhicule satellite (3) présentent des moyens (24, 342) pour une transmission d'énergie non liée par corps, en particulier une transmission d'énergie inductive (310), pour l'opération de chargement de l'accumulateur d'énergie (34) du véhicule satellite (3).

4. Dispositif de commande de rayon (1) l'une des revendications 1 à 3, dans lequel l'appareil de commande de rayon (2) et le véhicule satellite (3) présentent des moyens (23) pour déterminer la position du véhicule satellite (3), par ex. des télémètres à laser, des cellules ou des codeurs incrémentiels.

5. Dispositif de commande de rayon (1) l'une des revendications 1 à 4, dans lequel l'accumulateur d'énergie (34) présente une batterie de secours (341) pour l'alimentation électrique de secours du véhicule satellite (3).

6. Dispositif de commande de rayon (1) selon la revendication 5, dans lequel le dispositif de surveillance (345) pour surveiller l'état de charge est conçu en outre pour surveiller la température des super-condensateurs (340) et de la batterie de secours (341).

7. Dispositif de commande de rayon (1) selon la revendication 5 ou 6, dans lequel la batterie de secours (341) peut être chargée avec l'opération de chargement des super-condensateurs (340).

8. Dispositif de commande de rayon (1) l'une des revendications 5 à 7, dans lequel le dispositif de commande (35) est ainsi conçu que lors d'un passage à la batterie de secours (341), un programme de secours est automatiquement exécuté.

9. Dispositif de commande de rayon (1) l'une des revendications 1 à 8, dans lequel l'appareil de commande de rayon (2) et le véhicule satellite (3) peuvent être reliés par le biais d'un câble de chargement de secours (5) pour charger l'accumulateur d'énergie (34).

10. Dispositif de commande de rayon (1) l'une des revendications 1 à 9, dans lequel le dispositif de levage du véhicule satellite (3) comprend un moteur de levage (30) et un vérin (31) pour soulever la palette (900).

11. Dispositif de commande de rayon (1) l'une des revendications 1 à 10, dans lequel le véhicule satellite comprend un moteur d'entraînement (32) qui est ainsi conçu que lors d'une procédure de freinage du moteur d'entraînement (32), de l'énergie est récupérée et peut être stockée dans l'accumulateur d'énergie (34).

12. Dispositif de commande de rayon (1) l'une des revendications 1 à 11, dans lequel le véhicule satellite (3), en tant que véhicule satellite principal (503), peut être couplé mécaniquement et électriquement à un autre véhicule satellite (3) en tant que véhicule satellite secondaire (504), de telle façon que l'unité de commande (35) du véhicule satellite principal (503) commande également le véhicule satellite secondaire (504).

13. entrepôt à canaux (9) comprenant une pluralité de canaux (90) pour recevoir de la marchandise de stockage, par exemple des palettes (900), dans lequel l'entrepôt à canaux (9) comprend un dispositif de commande de rayon (1) selon l'une des revendications 1 à 12.
